# EUROPÄISCHE PATENTANMELDUNG

(11) **EP 4 019 250 A1**
(43) Veröffentlichungstag der Anmeldung: **29.06.2022**
(21) Anmeldenummer: 21210486.3
(22) Anmeldetag: 25.11.2021
(51) Int. Cl.: B32B 27/40, B32B 27/12, B32B 7/12

(54) **VERBUNDMATERIAL UND VERFAHREN ZU DESSEN HERSTELLUNG**

(30) Priorität: 22.12.2020 DE 102020216443
(71) Anmelder: Benecke-Kaliko AG, 30419 Hannover (DE)
(72) Erfinder: Lodder, Martin, 30165 Hannover (DE); Stölting, Andreas, 30165 Hannover (DE); Stichnothe, Karsten, 30165 Hannover (DE)
(74) Vertreter: Continental Corporation

(57) **Zusammenfassung**

Die vorliegende Erfindung betrifft ein Verbundmaterial, wobei auf einer Basisplatte eine Folie aufgebracht ist, wobei die Folie mindestens die folgenden Schichten
a) mindestens ein textiles Gewebe,
b) mindestens einen Klebstoff,
c) mindestens eine Tragschicht auf Basis eines thermoplastischen Polyurethans,
d) mindestens eine Druckfarbenschicht,
e) mindestens eine Klarsichtschicht und
f) mindestens eine Lackschicht,
in dieser Reihenfolge umfasst, ein Verfahren zu dessen Herstellung sowie die Verwendung dieses Verbandmaterials als Bodenbelag, insbesondere in einem Schienenfahrzeug.

## Beschreibung

Die vorliegende Erfindung betrifft ein Verbundmaterial, ein Verfahren zu dessen Herstellung sowie die Verwendung dieses Verbandmaterials als Bodenbelag, insbesondere in einem Schienenfahrzeug.

An Bodenbeläge, insbesondere in Schienenfahrzeugen, werden eine Reihe von Anforderungen gestellt. So sollten solche Bodenbeläge ausreichend verschleißfest und leicht reinigbar sein, so dass diese längere Zeit ohne Austausch eingesetzt werden können. Ferner sollten diese Bodenbeläge den gültigen Brandschutznormen, wie beispielsweise der Europäischen Schienenverkehr Brandschutznorm EN 45545-2:2020-10, entsprechen.

Heutzutage weisen Bodenbeläge, insbesondere Bodenbeläge in Schienenfahrzeugen, in der Regel eine Basisplatte, bestehend aus Birken-oder Buchensperrholz bzw. aus Aluminium auf, auf die Kautschukmatten mit einer Stärke von etwa 2,5 bis 5 mm aufgeklebt werden. Die Fugen bzw. Stoßkanten werden dabei in der Regel mit einem separaten Fugenmaterial gefüllt. Diese Kautschukmatten haben regelmäßig ein Flächengewicht von 2,5 kg/m² bis 5 kg/m². Damit sind diese eingesetzten Kautschukmatten relativ dick, schwer und unflexibel. Zudem ist der Oberflächenabrieb dieser Matten relativ schlecht, was zu einem schnellen Verschleiß des Materials führt.

Diese üblicherweise eingesetzten Bodenbeläge sind daher in mehrerlei Hinsicht verbesserungsbedürftig. Die vorliegende Erfindung befasst sich mit diesem Bedarf.

Es war die Aufgabe der vorliegenden Erfindung die bekannten Bodenbeläge, insbesondere die Bodenbeläge in Schienenfahrzeugen, zu verbessern. Diese Bodenbeläge sollten leichter, dünner, damit flexibler und trotzdem abriebfester sein. Dabei sollten die gültigen Brandschutznormen, wie die Europäischen Schienenverkehr Brandschutznorm EN 45545-2:2020-10, insbesondere der Anforderungssatz R10 für Bodenbeläge und -aufbauten mit Gefährdungsklasse HL2 (Hazard level2) dieser Norm, eingehalten werden. Ferner sollten die eingesetzten Materialien möglichst halogenfrei sein.

Gelöst wird diese Aufgabe durch ein Verbundmaterial gemäß Anspruch 1, wobei auf einer Basisplatte eine Folie aufgebracht ist, wobei die Folie mindestens die folgenden Schichten
a) mindestens ein textiles Gewebe,
b) mindestens einen Klebstoff,
c) mindestens eine Tragschicht auf Basis eines thermoplastischen Polyurethans,
d) mindestens eine Druckfarbenschicht,
e) mindestens eine Klarsichtschicht und
f) mindestens eine Lackschicht,
in dieser Reihenfolge umfasst.

Weitere vorteilhafte Ausbildungen sind in den Unteransprüchen offenbart.

Im Folgenden kann das Wort "umfassend" sowohl "enthaltend" als auch "bestehend aus" bedeuten.

Das erfindungsgemäße Verbundmaterial hat den Vorteil, dass die Folie, die auf die Basisplatte aufgebracht wird relativ dünn, mit Dicken von unter 1 mm, vorzugsweise von unter 0,7 mm, ausführbar ist. Damit ergeben sich vorteilhafte Flächengewichte von unter 1 kg/m², vorzugsweise von unter 700 g/m². Diese geringe Flächengewichte sind insbesondere beim Einsatz in Fahrzeugen, wie Schienenfahrzeugen, aber auch in Fahrstühlen vorteilhaft, da mit einem geringeren Gesamtgewicht gleichzeitig eine Energieersparnis eintritt. Trotz der geringen Dicke und des geringen Flächengewichts zeichnet sich das erfindungsgemäße Verbundmaterial durch eine besonders vorteilhafte Abriebfestigkeit aus.

Die vorteilhaften Eigenschaften des Verbundmaterials ergeben sich vorzugsweise aus dem synergistischen Zusammenwirken aller unter den Punkten a) bis f) definierten Schichten.

Thermoplastische Polyurethane sind grundsätzlich bekannt. Deren Herstellung erfolgt üblicher Weise durch Umsetzung der Komponenten (1) organische Isocyanaten und (2) gegenüber Isocyanaten reaktiven Verbindungen und gegebenenfalls (3) Kettenverlängerungsmitteln gegebenenfalls in Gegenwart von mindestens einem (4) Katalysator und/oder (5) üblichen Hilfsstoffen und/oder Zusatzstoffen.

Als thermoplastisches Polyurethan sind beispielsweise Polyurethane geeignet, die ein oder mehrere funktionelle Gruppen ausgewählt aus Ether-, Ester-, Carbonat- und/oder Harnstoffgruppen aufweisen. Ethergruppen können dabei aus Polyetherpolyolen, Estergrupppen aus Polyesterpolyolen und Carbonatgruppen aus Polycarbonatpolyolen resultieren, die für die Herstellung des Polurethans verwendet werden. Harnstoffgruppen in Polyurethanen resultieren in der Regel aus der Reaktion von Isocyanatgruppen mit Wasser, bei der CO₂ freigesetzt wird, können aber auch von Aminen gebildet werden, die in das Polyurethan einbezogen werden können.

Als organische Isocyanate (1) werden bevorzugt aliphatische, cycloaliphatische, araliphatische und/oder aromatische Isocyanate eingesetzt.

Als Isocyanatbasis für die eingesetzten Polyurethane sind beispielsweise Hexamethylendiisocyanat (HDI), Isophorondiisocyanat(IPDI), Dicyclohexylmethan-4,4'-Diisocyanat (HMDI), 2- Methylpentandiisocyanat (MPDI), 2,2,4-Trimethylhexamethylendiisocyanat/2,4,4-Trimethyl-hexamethylendiisocyanat (TMDI), Tetramethylendiisocyanat, Norbornandiisocyanat (NBDI), Methylendiphenyldiisocyanat (MDI), Diisocyanatomethylbenzen, insbesondere das 2,4- und das 2,6-Isomere und technische Gemische beider Isomeren (TDI), Tetramethylxylylendiisocyanat (TMXDI) und Naphthylendiisocyanat (NDI) oder Derivate aus diesen Isocyanaten wie z. B. Isocyanurate, Uretdione, Allophanate und/oder Biurete oder Gemische aus vorstehenden Substanzen geeignet, wobei insbesondere aromatische thermoplastische Polyurethane auf Basis von MDI, TDI, TMXDI oder NDI bevorzugt sind, da thermoplastische Polyurethane auf dieser Basis eine im Vergleich zu aliphatischen thermoplastischen Polyurethanen hohe Menge an Flammschutzmitteln aufnehmen können und auch kostengünstiger als aliphatische Isocyanate sind.

Als gegenüber Isocyanaten reaktiven Verbindungen (2) werden in der Regel Polyole, mindestens Diole, eingesetzt.

Geeignete Polyole zur Herstellung von Polyurethanen mit Estergruppen sind beispielsweise lineare Polyesterdiole oder auch schwach verzweigte Polyesterpolyole (mit einer Verzweigung auf 500 Gewichtseinheiten, bevorzugt einer Verzweigung auf 1000 Gewichtseinheiten), wie sie in bekannter Weise aus aliphatischen, cycloaliphatischen und aromatischen Di- oder Polycarbonsäuren bzw. ihren Anhydriden hergestellt werden können. Bevorzugte Carbonsäurebausteine sind dabei z.B. Adipin-, Decandicarbon-, Terephthal-, Isophthal-, o-Phthal-, Tetrahydrophthal-, Hexahydrophthal- sowie Säureanhydride, wie o-Phthalsäureanhydrid oder Gemisch davon. Geignete Polyolbausteine sind mehrwertige Alkohole wie Ethandiol, Di-, Tri-, oder Tetraethylenglykol, 1,2-Propandiol, Di-, Tri-, oder Tetrapropylenglykol, Butandiol-1,4, Hexandiol-1,6, 2,2-Dimethyl-1,3-propandiol, 1,4-Dimethylolcyclohexan oder deren Gemische. Als Verzweigung generierende Polyole können höherfunktionelle Polyole, wie Trimethylolpropan oder Glycerin, zum Einsatz kommen.

Als mehrwertige Alkohole zur Herstellung von Polyesterpolyolen zur Herstellung der Polyurethane kommen zudem cycloaliphatische und/oder aromatische Di- und Polyhydroxylverbindungen in Betracht. Anstelle der freien Polycarbonsäure können auch die entsprechenden Polycarbonsäureanhydride oder entsprechende Polycarbonsäureester von niedrigen Alkoholen oder deren Gemische zur Herstellung der Polyesterpolyole verwendet werden.

Als Polyole zur Herstellung der Polyurethane können auch Homo- oder Mischpolymerisate von Lactonen verwendet werden, die vorzugsweise durch Anlagerung von Lactonen oder Lactongemischen, wie Butyrolacton, ε-Caprolacton und/oder Methyl-ε-caprolacton, an geeignete di- und/oder höherfunktionelle Startermoleküle, wie z.B. niedermolekularen, mehrwertigen Alkohole, erhalten werden.

Als geeigneter Bereich für das Molekulargewicht der Polyester kann ein Bereich von 500 bis 10 000 g/mol und insbesondere 1 000 bis 6 000 g/mol angegeben werden.

Auch Hydroxylgruppen aufweisenden Polycarbonate kommen als Polyole zur Herstellung der Polyurethandispersionen in Betracht, z.B. solche, die durch Umsetzung von Diolen, wie 1,4-Butandiol und/oder 1,6-Hexandiol, mit Diarylcarbonaten, z.B. Diphenylcarbonat, Dialkylcarbonat, wie Dimethylcarbonat oder Phosgen, hergestellt werden können. Derartige Polycarbonate weisen zweckmäßig ein Molekulargewicht Mw von 800 bis 5000 g/mol auf.

Weitere geeignete Polyole zur Herstellung der Polyurethane sind Polyetherpolyole, wie z.B. Polyethylenoxid, Polypropylenoxid oder Polytetramethylenglykole, oder Co- oder Blockcopolymere dieser Polymere, vorzugsweise mit einem Molekulargewicht Mw von 500 bis 10000 und besonders bevorzugt von 1500 bis 5000 g/mol. Die genannten Polyetherpolyole können gegebenenfalls in Kombination mit Polycarbonatpolyolen eingesetzt werden.

Als Kettenverlängerungsmittel (3) können bevorzugt aliphatische, araliphatische, aromatische und/oder cycloaliphatische Verbindungen mit einem Molekulargewicht von 50 g/mol bis 500 g/mol, bevorzugt difunktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen, insbesondere 1,2-Ethylenglydkol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (3) nur primäre Hydroxylgruppen. Bevorzugt sind hierbei 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Katalysatoren (4) welche insbesondere die Reaktion zwischen den NCO-Gruppen der Diisocyanaten (1) und den gegenüber Isocyanaten reaktiven Verbindungen (2) und ggf. dem Kettenverlängerungsmittel (3) beschleunigen, sind in einer bevorzugten Ausführungsform tertiären Amine, insbesondere Triethylamin, Dimethylcyclohexylamin, N-Methylmorpholin, N,N'- Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalze in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-etyhlhexanoat und Bismut-octanoat.

Die Katalysatoren (4) werden bevorzugt in Mengen von 0,0001 bis 0,1 Gew.-Teilen pro 100 Gew.-Teilen der mit Isocyanten reakiven Verbindung (2) eingesetzt.

Neben Katalysatoren (4) können auch übliche Hilfsstoffe (5) hinzugefügt werden. Genannt seien beispielsweise oberflächenaktive Substanzen, Füllstoffe, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher.

Vorzugsweise weist das thermoplastische Polyurethan eine Härte von 70 bis 90 Shore A auf (gemessen nach DIN ISO 7619-1 (02/2012)).

Besonders bevorzugt ist der Einsatz von aromatischen oder aliphatischen Polyether-TPU, insbesondere in einem Härtebereich von 70 - 90 Shore A (gemessen nach DIN ISO 7619-1 (02/2012)).

Geeignete thermoplastische Polyurethane umfassen beispielsweise BASF Elastollan A1190 oder Lubrizol Pearlcoat 161, Pearlcoat 162 oder Pearlcoat 165 oder Estane 54610.

Insbesondere können auch Flammschutzmittel enthalten sein.

Als Flammschutzmittel werden insbesondere nicht halogenhaltige Flammschutzmittel eingesetzt, wobei der Einsatz halogenhaltiger Flammschutzmittel nicht ausgeschlossen ist.

Das erfindungsgemäße Verbundmaterial ist ferner vorzugsweise dadurch gekennzeichnet, dass die Basisplatte Materialien umfasst, die ausgewählt sind aus Holz, Sperrholz, Glasfaser, Carbonfaserlaminaten und/oder Hohlkammer- oder Wabenplatten aus Aluminium.

Besonders bevorzugt sind Birkensperrholzplatten.

Geeignete Birkensperrholzplatten sind beispielsweise von den Herstellern Geta oder Koskisen erhältlich.

Die Basisplatte weist vorzugsweise eine Dicke von 10 bis 25 mm, vorzugsweise von 13 bis 23 mm oder von 13 bis 18 mm auf.

Geeignet sind insbesondere Birkensperrholzplatten mit einer Dicke von 10 bis 25 mm oder von 13 bis 23 mm, vorzugsweise von 15 bis 20 mm oder von 13 bis 18 mm, beispielsweise von 17 mm, insbesondere mit einer Korkeinlage, wobei die Korkeinlage eine Dicke von vorzugsweise 1 bis 10 mm oder 3 bis 5 mm, beispielsweise 4 mm, aufweist.

Das erfindungsgemäße Verbundmaterial ist ferner dadurch gekennzeichnet, dass mindestens ein textiles Gewebe enthalten ist.

Als textiles Gewebe können entweder mit Flammschutzmittel ausgerüstete Gewebe oder Gewebe eingesetzt werden, die üblicherweise schon schwerer entflammbar sind. Das können beispielsweise Gewebe sein, deren textile Fäden schon flammschützende Einheiten in den Polymerketten enthalten oder beispielsweise auch Gewebe auf Basis flammhemmender aromatischer Polyamide (z.B. Kevlar^{®}, Nomex^{®}) oder anderer flammhemmender Polymere (beispielsweise Lenzing FR^{®}, Basofil^{®}, Twaron^{®}, Kermel^{®}, BelcoTex^{®}, Pyron^{®}, Trevira CS^{®}, PolySulfonamid (Tanlon^{®}), Polyphenylensulfid) oder auf Basis von Metallfäden oder Polymerfäden, die metallische Anteile enthalten.

Besonders bevorzugt sind aber Glasgewebe oder Gewebe auf Basis von Mineralien, wie Basaltfasergewebe, die eine sehr gute flammhemmende Wirkung aufweisen.

Das erfindungsgemäße Verbundmaterial ist daher vorzugsweise dadurch gekennzeichnet, dass das mindestens eine textile Gewebe ein Glasfasergewebe umfasst.

Das textile Gewebe wird mit mindestens einem Klebstoff mit der Polyurethan-Tragschicht verbunden.

Prinzipiell kann hier jeder dem Fachmann bekannte, geeignete Klebstoffe eingesetzt werden.

Das erfindungsgemäße Verbundmaterial ist jedoch vorzugsweise, dadurch gekennzeichnet, dass der mindestens eine Klebstoff einen Klebstoff auf Polyurethanbasis umfasst.

Geeignet ist hierfür beispielsweise ein thermoaktivierbarer PUR Dispersionsklebstoff, vorzugsweise mit Isocyanat-Vernetzer.

Das erfindungsgemäße Verbundmaterial ist dadurch gekennzeichnet, dass es mindestens eine Druckfarbenschicht umfasst. Damit können aus ästhetischen Gründen Bilder oder Muster auf den Verbund aufgebracht werden.

Prinzipiell sind hierzu alle dem Fachmann bekannten und geeigneten Druckfarben einsetzbar.

Das erfindungsgemäße Verbundmaterial ist jedoch vorzugsweise dadurch gekennzeichnet, dass die mindestens eine Druckfarbenschicht eine Druckfarbenschicht auf Polyurethanbasis, vorzugsweise wie oben definiert, umfasst.

Beispielsweise könne hier Druckfarben auf Basis von Impranil ELH mit handelsüblichen LM-basierten Pigmentzubereitungen eingesetzt werden.

Das erfindungsgemäße Verbundmaterial ist dadurch gekennzeichnet, dass es mindestens eine Klarsichtschicht umfasst. Damit können die aus ästhetischen Gründen aufgebrachten Bilder oder Muster, die auf den Verbund aufgebracht werden vor Verschleiß geschützt werden und der gesamte Verbund gewinnt an Stabilität.

Prinzipiell sind hierzu alle dem Fachmann bekannten und geeigneten Materialien für eine Klarsichtschicht einsetzbar.

Das erfindungsgemäße Verbundmaterial ist jedoch vorzugsweise dadurch gekennzeichnet, dass die mindestens eine Klarsichtschicht eine Klarsichtschicht auf Basis eines thermoplastischen Polyurethans, wie oben definiert, umfasst.

Beispielsweise geeignet sind hier TPU Klarsichtfolien aus Elastollan Typen, wie sie beispielsweise unter dem Handelsnamen Epurex LPT bekannt sind.

Das erfindungsgemäße Verbundmaterial ist dadurch gekennzeichnet, dass es mindestens eine Lackschicht umfasst.

Prinzipiell sind hierzu alle dem Fachmann bekannten und geeigneten Materialien für eine Lackschicht einsetzbar.

Das erfindungsgemäße Verbundmaterial ist jedoch vorzugsweise dadurch gekennzeichnet, dass die mindestens eine Lackschicht eine Lackschicht auf Polyurethanbasis umfasst.

Geeignet sind hierfür beispielsweise Impranil ELH basierte Finishlacke.

Zur Verbesserung der Gebrauchstüchtigkeit insbesondere der Abriebbeständigkeit kann die Lackschicht auch in Form einer vernetzten oder vernetzenden Lackschicht vorliegen.

Bevorzugterweise eignen sich hierfür über elektromagnetische Strahlung vernetzende Systeme (UV-Licht Vernetzung, Elektronenstrahlvernetzung) oder thermisch bzw. über chemische Reaktionen vernetzende Systeme wie Isocyanat- oder Carbodiimid-vernetzende Polyurethansysteme.

In dem erfindungsgemäßen Verbundmaterial weisen die einzelnen Schichten vorzugsweise die folgenden Dicken auf:
a) Textile Gewebeschicht: 50 bis 150 µm, vorzugsweise 70 bis 120 µm, insbesondere etwa 90 bis 110 µm.
b) Klebstoffschicht: 3 bis 30 µm, vorzugsweise 10 bis 20 µm, insbesondere etwa 15 µm.
c) Tragschicht auf Basis eines thermoplastischen Polyurethans: 200 bis 500 µm, vorzugsweise 300 bis 400 µm, insbesondere etwa 380 µm.
d) Druckfarbenschicht: 10 bis 50 µm, vorzugsweise 20 bis 40 µm, insbesondere etwa 30 µm.
e) Klarsichtschicht: 50 bis 150 µm, vorzugsweise 60 bis 100 µm, insbesondere etwa 80 bis 90 µm.
f) Lackschicht: 3 bis 30 µm, vorzugsweise 5 bis 25 µm, insbesondere etwa 8 bis 13 µm.

Vorzugsweise weist die gesamte Folie des Verbundmaterials eine Dicke von kleiner als 1 mm, vorzugsweise von kleiner als 700 µm auf. Besonders geeignete Dicken bewegen sich im Bereich von 500 bis 700 µm.

Vorzugsweise weist das gesamte Verbundmaterial, also die Basisplatte und die Folie, eine Dicke von 10 bis 30 mm, vorzugsweise von 13 bis 21 mm, insbesondere von etwa 17 bis 18 mm, auf.

Das Flächengewicht der Folie des Verbundmaterials beträgt vorzugsweise unter 1 kg/m², vorzugsweise unter 700 g/m². Geeignete Flächengewichte bewegen sich im Bereich von 500 bis 700 g/m², vorzugsweise von 550bis 650 g/m².

Das Flächengewicht des gesamten Verbundmaterials, also die Basisplatte und die Folie, beträgt vorzugsweise von 8000 bis 14000 g/m², vorzugsweise von 9000 bis 13000 g/m², insbesondere von 10000 bis12000 g/m².

Das erfindungsgemäße Verbundmaterial ist ferner vorzugsweise dadurch gekennzeichnet, dass die mindestens eine Tragschicht auf Basis eines thermoplastischen Polyurethans mindestens ein Flammschutzmittel ausgewählt aus stickstoff- und phosphorhaltigen Flammschutzmitteln, vorzugsweise Polyphosphaten, Phosphonaten, Phosphinaten, Melamin und/oder Polyisocyanuraten, vorzugsweise aus Phosphonaten, und/oder aus wasserabspaltenden anorganischen Verbindungen, vorzugsweise Zinkborat, Aluminium- und/oder Magnesiumhydroxid, umfasst.

Der Einsatz von Mischungen von Flammschutzmitteln kann insbesondere deutlich vorteilhaftere brandhemmende Eigenschaften erzeugen als es durch eine ausschließlich additive Wirkung von einzelnen Flammschutzmitteln zu erwarten wäre (synergistischer Effekt).

Vorzugsweise ist kein halogenhaltiges Flammschutzmittel enthalten.

Bevorzugt sind hierbei Phosphonat-basierte Flammschutzmittel wie Aflammmit PCO 700 oder PCO800 oder PCO 900.

Das Flammschutzmittel ist vorzugsweise in einer Menge von 10 bis 25 Gew.-%, insbesondere von 10 bis 20 Gew.-%, bevorzugt von 10 bis 15 Gew.-%, besonders bevorzugt von 10 bis 12 Gew.-%, bezogen auf das Gesamtgewicht der Tragschicht in der Tragschicht auf Basis eines thermoplastischen Polyurethans enthalten.

Ferner können als Füllstoff auch nichtbrennbare Fasern in das thermoplastische Polyurethan eingebracht werden. Bevorzugterweise können hier mineralische Fasern, insbesondere Glasfasern eingesetzt werden. Solche Fasern können beispielsweise zur mechanischen Verstärkung des Verbundes eingesetzt werden, ohne die brandhemmende Wirkung insgesamt negativ zu beeinträchtigen.

Die Flammschutzmittel können auch in den übrigen Schichten des Verbundmaterials eingesetzt werden.

In allen Schichten des erfindungsgemäßen Verbundgebildes können ggf. Hilfsmittel und Additive wie Gleitmittel, Rheologiehilfsmittel, Stabilisatoren gegen oxidativen, thermischen, hydrolytischen, strahlungsinduzierten oder mikrobiellen Abbau oder Alterung, Trennmittel, Pigmente, Verstärkungsstoffe, Füllstoffe und/oder Treibmittel eingesetzt werden.

Vorzugsweise wird bei der Herstellung des erfindungsgemäßen Verbundmaterials die Folie hergestellt und dann auf die Basisplatte aufgebracht. Dies erfolgt vorzugsweise durch Verklebung mit geeigneten Klebstoffen auf PUR oder Acrylat-Basis.

Es kann auch eine Selbstklebefolie Typ 950 (von 3M.) eingesetzt werden.

Das erfindungsgemäße Verbundmaterial ist ferner vorzugsweise dadurch gekennzeichnet, dass das Verbundmaterial den Anforderungssatz R10 für Bodenbeläge und -aufbauten mit Gefährdungsklasse HL2 (Hazard level2) der Europäischen Schienenverkehr Brandschutznorm EN 45545-2:2020-10 erfüllt.

Beim Einsatz des erfindungsgemäßen Verbundmaterials in anderen Fahrzeugen oder Immobilien, sind die analog gültigen Normen heranzuziehen.

Das erfindungsgemäße Verbundmaterial gemäß irgendeinem der vorhergehenden Ansprüche ist vorzugsweise dadurch gekennzeichnet, dass der Abrieb des Verbundmaterials im Abriebtest gemäß der DIN ISO 9352:2018-08 nach 1000 Umdrehungen kleiner als 150 mg, vorzugsweise kleiner als 100 mg, insbesondere kleiner als 80 mg ist.

Verbundmaterialien auf Kautschukbasis, wie aus dem Stand der Technik bekannt, weisen in der Regel Abriebe von mehr als 200 mg oder mehr als 250 mg unter analogen Bedingungen auf.

Die vorliegende Erfindung betrifft ferner die Herstellung eines Verbundmaterials wie vorstehend beschrieben, wobei das Verfahren mindestens die folgenden Schritte umfasst:
- Herstellung der Tragschicht auf Basis eines thermoplastischen Polyurethans und der Klarsichtschicht durch Folienkalandrierung und/oder Extrusion, vorzugsweise durch Folienkalandrierung;
- Bedruckung der Tragschicht mit Druckdekoren, vorzugsweise aus ästhetischen Gründen, beispielsweise mittels Rastertiefdruck;
- thermische- oder Klebekaschierung der Tragschicht und der Klarsichtschicht in geeigneter Reihenfolge untereinander und mit der Glasgewebeschicht, vorzugsweise in einer Kaschiermaschine.

Anschließend kann der nach dem vorstehend geschilderten Verfahren gebildete Verbund mit einer Klarlackschicht versehen werden.

Das Verfahren kann ferner die optionale rückseitige Selbstklebeausrüstung des vorstehend gebildeten Verbundes in einem Transferkalander, beispielsweise durch Roll-to-Roll Verfahren oder aber manuell während der Verlegung, umfassen.

Alle für das Verbundmaterial offenbarten bevorzugten Ausführungsformen und Definitionen gelten analog für das erfindungsgemäße Verfahren.

Die vorliegende Erfindung betrifft auch ein Verbundmaterial erhältlich gemäß dem vorstehend beschriebenen Verfahren.

Alle für das Verbundmaterial offenbarten bevorzugten Ausführungsformen und Definitionen gelten analog für das Verbundmaterial erhältlich gemäß dem erfindungsgemäßen Verfahren.

Die vorliegende Erfindung betrifft auch die Verwendung eines Verbundmaterials wie vorstehend beschrieben oder erhältlich gemäß dem vorstehend beschriebenen Verfahren als Bodenbelag.

Alle für das Verbundmaterial offenbarten bevorzugten Ausführungsformen und Definitionen gelten analog für die erfindungsgemäße Verwendung des Verbundmaterials.

Die vorliegende Erfindung betrifft insbesondere die Verwendung eines Verbundmaterials wie vorstehend beschrieben oder erhältlich gemäß dem vorstehend beschriebenen Verfahren als Bodenbelag in einem Schienenfahrzeug, einem sonstigen Fahrzeug, wie einem Flugzeug, einem Fahrstuhl und/oder einer Immobilie.

Die vorliegende Erfindung betrifft insbesondere die Verwendung eines Verbundmaterials wie vorstehend beschrieben oder erhältlich gemäß dem vorstehend beschriebenen Verfahren als Bodenbelag in einem Schienenfahrzeug.

Die Erfindung wird nachfolgend anhand von nicht beschränkenden Beispielen näher erläutert.

### Beispiele

Es wurde eine Folie für ein Verbundmaterial mit dem folgenden Aufbau hergestellt:
a. Glasfaser Gewebe (ca. 90 µm), von Porcher, Typ 2116.
b. Polyurethan Klebstoff (ca. 15 µm),
c. TPU Tragschicht, flexibel, druckfest, schwer entflammbar und selbstverlöschend ausgerüstet (ca. 380µm), aus Pearlcoat 162 und Aflammit PC700.
d. Polyurethan Druckfarbenschicht mit Pigmenten zur Darstellung auch komplexer, mehrfarbiger Oberflächenbedruckungen (ca. 30µm), aus Impranil ELH und Pigmenten und üblichen Hilfsstoffen.
e. TPU Klarsichtschicht als weitere Schutzschicht zum Schutz der Bedruckung (ca. 90 µm), aus BASF Elastollan basiertem TPU
f. Hochabriebfeste Lackschicht aus Polyurethan, (ca. 15µm), auf Basis von Impranil ELH.

Damit konnte ein extrem leichtgewichtiger, hochabriebfester und verzugsfreier Bahnbodenbelag mit besonders hoher Haltbarkeit und exzellenten Gestaltungsmöglichkeiten durch Mehrfarbdruck unter einer transparenten Klarsichtschicht hergestellt werden. Dieser erfüllt die gültigen europäischen Schienenverkehr Brandschutznorm EN 45545-2, Anforderungssatz R10 für Bodenbeläge und -aufbauten mit Gefährdungsklasse HL2 (Hazard level2). Der Aufbau ist halogenfrei, weichmacherfrei und emissionsarm.

Die bis dato im Markt üblichen Produkte weisen Flächengewichte zwischen 2800 und 4500 g/m² auf. Im Gegensatz dazu wiegt das hier beschriebene Material nur etwa 600 g/m².

Es besteht daher ein großes Energieeinsparungspotential bei gleichzeitig deutlich verbesserter Haltbarkeit durch Hochabriebfestigkeit.

Zum Test der Abriebfestigkeit wurde ein Abriebtest nach DIN ISO 9352:2018-08 durchgeführt.

Dabei wurde zum Vergleich ein Kautschukbelag, wie er heute in Serie in Schienenfahrzeugen eingesetzt wird, verwendet.

Der Abrieb nach 1000 Umdrehungen betrug im Fall des bekannten Serienmaterials 258,63 mg und bei dem erfindungsgemäßen Verbundmaterial 77,09 mg

Als Vergleichsmaterial diente ein Bahnbodenmaterial des Herstellers Nora, Design Stone.

## Patentansprüche

1. Verbundmaterial, wobei auf einer Basisplatte eine Folie aufgebracht ist, wobei die Folie mindestens die folgenden Schichten
a) mindestens ein textiles Gewebe,
b) mindestens einen Klebstoff,
c) mindestens eine Tragschicht auf Basis eines thermoplastischen Polyurethans,
d) mindestens eine Druckfarbenschicht,
e) mindestens eine Klarsichtschicht und
f) mindestens eine Lackschicht,
in dieser Reihenfolge umfasst.

2. Verbundmaterial gemäß Anspruch 1, **dadurch gekennzeichnet, dass** die Basisplatte Materialien umfasst, die ausgewählt sind aus Holz, Sperrholz, Glasfasern, Carbonfaserlaminaten, und/oder Hohlkammer- oder Wabenplatten aus Aluminium.

3. Verbundmaterial gemäß irgendeinem der vorhergehenden Ansprüche, **dadurch gekennzeichnet, dass** das mindestens eine textile Gewebe ein Glasfasergewebe umfasst.

4. Verbundmaterial gemäß irgendeinem der vorhergehenden Ansprüche, **dadurch gekennzeichnet, dass** der mindestens eine Klebstoff einen Klebstoff auf Polyurethanbasis umfasst.

5. Verbundmaterial gemäß irgendeinem der vorhergehenden Ansprüche, **dadurch gekennzeichnet, dass** die mindestens eine Druckfarbenschicht eine Druckfarbenschicht auf Polyurethanbasis umfasst.

6. Verbundmaterial gemäß irgendeinem der vorhergehenden Ansprüche, **dadurch gekennzeichnet, dass** die mindestens eine Klarsichtschicht eine Klarsichtschicht auf Basis eines thermoplastischen Polyurethans umfasst.

7. Verbundmaterial gemäß irgendeinem der vorhergehenden Ansprüche, **dadurch gekennzeichnet, dass** die mindestens eine Lackschicht eine Lackschicht auf Polyurethanbasis umfasst.

8. Verbundmaterial gemäß irgendeinem der vorhergehenden Ansprüche, **dadurch gekennzeichnet, dass** die Basisplatte eine Dicke von 13 bis 23 mm aufweist.

9. Verbundmaterial gemäß irgendeinem der vorhergehenden Ansprüche, **dadurch gekennzeichnet, dass** das textile Gewebe eine Dicke von 50 bis 150 µm aufweist.

10. Verbundmaterial gemäß irgendeinem der vorhergehenden Ansprüche, **dadurch gekennzeichnet, dass** die mindestens eine Tragschicht eine Dicke von 200 bis 500 µm aufweist.

11. Verbundmaterial gemäß irgendeinem der vorhergehenden Ansprüche, **dadurch gekennzeichnet, dass** die mindestens eine Tragschicht mindestens ein Flammschutzmittel ausgewählt aus stickstoff- und phosphorhaltigen Flammschutzmitteln, vorzugsweise Polyphosphaten, Phosphonaten, Phosphinaten, Melamin und/oder Polyisocyanuraten und/oder aus wasserabspaltenden anorganischen Verbindungen, vorzugsweise Zinkborat, Aluminium- und/oder Magnesiumhydroxid, umfasst.

12. Verbundmaterial gemäß irgendeinem der vorhergehenden Ansprüche, **dadurch gekennzeichnet, dass** das Verbundmaterial den Anforderungssatz R10 für Bodenbeläge und -aufbauten mit Gefährdungsklasse HL2 (Hazard level2) der Europäischen Schienenverkehr Brandschutznorm EN 45545-2:2020-10 erfüllt.

13. Verbundmaterial gemäß irgendeinem der vorhergehenden Ansprüche, **dadurch gekennzeichnet, dass** der Abrieb des Verbundmaterials im Abriebtest gemäß der DIN ISO 9352:2018-08 nach 1000 Umdrehungen kleiner als 150 mg ist.

14. Verfahren zur Herstellung eines Verbundmaterial gemäß irgendeinem der vorhergehenden Ansprüche, **dadurch gekennzeichnet, dass** das Verfahren mindestens die folgenden Schritte umfasst:
- Herstellung der Tragschicht auf Basis eines thermoplastischen Polyurethans und der Klarsichtschicht durch Folienkalandrierung und/oder Extrusion;
- Bedruckung der Tragschicht mit Druckdekoren;
- thermische- oder Klebekaschierung der Tragschicht auf Basis eines thermoplastischen Polyurethans und der Klarsichtschicht in geeigneter Reihenfolge untereinander und mit der Glasgewebeschicht.

15. Verwendung eines Verbundmaterials gemäß irgendeinem der Ansprüche 1 bis 14 als Bodenbelag, insbesondere in einem Schienenfahrzeug.
